# EUROPÄISCHE PATENTANMELDUNG

(11) **EP 2 921 921 A1**
(43) Veröffentlichungstag der Anmeldung: **23.09.2015**
(21) Anmeldenummer: 14160499.1
(22) Anmeldetag: 18.03.2014
(51) Int. Cl.: G05B 19/409, G06F 3/0489, G06F 3/0482, G06F 3/0485

(54) **Verfahren zum Betrieb einer Bedienungseinrichtung eines Automatisierungsgeräts**

(71) Anmelder: Siemens Aktiengesellschaft, 80333 München (DE)
(72) Erfinder: Jenneßen, Johannes, 41366 Schwalmtal (DE); Scheuermann, Uwe, 90431 Nürnberg (DE)

(57) **Zusammenfassung**

Die Erfindung ist ein Verfahren zum Betrieb einer Bedienungseinrichtung eines Automatisierungsgeräts, wobei die Bedienungseinrichtung eine Anzeigeeinrichtung (18) umfasst und wobei mittels der Anzeigeeinrichtung (18) eine Darstellung von Daten (24) des Automatisierungsgeräts und/oder eines mittels des Automatisierungsgeräts gesteuerten Prozesses erfolgt, wobei die Darstellung mittels der Anzeigeeinrichtung (18) eine Darstellung eines zentralen Anzeigebereichs (22) sowie eine Darstellung zumindest einer als weiterer Anzeigebereich fungierenden Kachel (26) außerhalb des zentralen Anzeigebereichs (22) umfasst und wobei einer Kachel (26) zugeordnete Daten (24) aufgrund einer entsprechenden Bedienhandlung eines Benutzers der Bedienungseinrichtung an der Position des zentralen Anzeigebereichs (22) dargestellt werden.

## Beschreibung

Die Erfindung betrifft ein Verfahren zum Betrieb einer Bedienungseinrichtung eines Automatisierungsgeräts, nämlich ein Verfahren zur Spezifikation und Beeinflussung der von der Bedienungseinrichtung des Automatisierungsgeräts im Betrieb über eine Anzeigeeinrichtung ausgegebenen Daten und/oder Informationen. Die ausgegebenen Daten/Informationen werden im Folgenden zusammenfassend, ohne Verzicht auf eine weitergehende Allgemeingültigkeit, als Daten bezeichnet.

Bei dem Automatisierungsgerät handelt es sich zum Beispiel um eine Produktionsmaschine, insbesondere eine CNC-Maschine oder eine CNC-Steuerung. Die Erfindung ist allerdings nicht auf solche Automatisierungsgeräte beschränkt und kommt dementsprechend auch für andere Automatisierungsgeräte, zum Beispiel sogenannte Bedien- und Beobachtungsgeräte, wie sie bei der Automatisierung technischer Prozesse Verwendung finden, in Betracht. Im Interesse einer besseren Lesbarkeit, aber ebenfalls ohne Verzicht auf eine weitergehende Allgemeingültigkeit, wird die nachfolgende Beschreibung am Beispiel einer Bedienungseinrichtung einer CNC-Steuerung - im Folgenden kurz als Bedienungseinrichtung bezeichnet - fortgesetzt. Entsprechend ist bei den nachfolgenden Ausführungen bei jeder Erwähnung einer Bedienungseinrichtung sinngemäß auch ein Automatisierungsgerät allgemeinerer Art mitzulesen.

Eine Bildschirmausgabe einer Bedienungseinrichtung für eine CNC-Steuerung ist heute in mehrere Bereiche gegliedert, von denen zu einem bestimmten Zeitpunkt jeweils nur einer sichtbar ist. Eine Umschaltung auf einen anderen Bereich erfolgt durch entsprechende Bedienhandlungen an der Bedienungseinrichtung. Dies ist insofern noch nicht optimal, als die Menge der dargestellten Daten auf die von dem jeweils dargestellten Bereich umfassten Daten beschränkt ist. Es wird also stets genau ein Bereich angezeigt und der Verwender der Bedienungseinrichtung erhält keine Informationen zu denjenigen Daten, die einem anderen, momentan nicht angezeigten Bereich zugeordnet sind. Die Umschaltung auf einen anderen Bereich erfordert Bedienhandlungen, üblicherweise eine Betätigung eines oder mehrerer Bedienelemente der Bedienungseinrichtung (Tasten oder sogenannte Softkeys) betätigt werden. Dies ist umständlich, zeitaufwändig und mitunter fehleranfällig, indem aufgrund der Bedienhandlung zwar ein anderer Bereich dargestellt wird, dieser aber immer noch nicht die von dem Verwender gewünschten Daten umfasst.

Eine Aufgabe der vorliegenden Erfindung besteht entsprechend darin, ein Verfahren zum Betrieb eines Automatisierungsgeräts anzugeben, bei dem die oben genannten Nachteile vermieden oder zumindest deren Auswirkungen reduziert sind.

Diese Aufgabe wird erfindungsgemäß mit einem Verfahren zum Betrieb einer Bedienungseinrichtung eines Automatisierungsgeräts, nämlich einem Verfahren zum Bedienen einer solchen Bedienungseinrichtung, mit den Merkmalen des Anspruchs 1 gelöst. Dazu ist vorgesehen, dass die Bedienungseinrichtung eine Anzeigeeinrichtung umfasst und dass mittels der Anzeigeeinrichtung eine Darstellung von Daten des Automatisierungsgeräts und/oder eines mittels des Automatisierungsgeräts gesteuerten Prozesses erfolgt. Die Darstellung mittels der Anzeigeeinrichtung umfasst eine Darstellung eines zentralen Anzeigebereichs sowie eine Darstellung zumindest einer als weiterer Anzeigebereich fungierenden Kachel außerhalb des zentralen Anzeigebereichs. Einer Kachel zugeordnete Daten werden aufgrund einer entsprechenden Bedienhandlung eines Benutzers der Bedienungseinrichtung an der Position des zentralen Anzeigebereichs dargestellt.

Die Darstellung der jeweiligen Daten ist also nicht mehr auf einen Anzeigebereich beschränkt. Stattdessen tritt neben diesen Anzeigebereich zumindest ein weiterer Anzeigebereich, der im Folgenden zur Unterscheidung als Kachel bezeichnet wird. Eine solche Kachel ist hinsichtlich der auf der Anzeigeeinrichtung belegten Fläche kleiner als der restliche Anzeigebereich, der im Folgenden als zentraler Anzeigebereich bezeichnet wird, ohne dass damit eine Bezeichnung einer speziellen Position auf der Anzeigeeinrichtung einhergeht.

Das oder jedes von der oder jeder außerhalb des zentralen Anzeigebereichs dargestellten Kachel umfasste Datum ist gleichzeitig mit dem oder jedem im zentralen Anzeigebereich dargestellten Datum sichtbar. Der Benutzer kann also neben den im zentralen Anzeigebereich dargestellten Daten auch Daten im Blick behalten, die in einer oder mehreren Kacheln angezeigt werden. Zudem kann der Benutzer eine Kachel gleichsam in den Vordergrund holen. Dann werden die einer Kachel zugeordneten Daten an der Position des zentralen Anzeigebereichs dargestellt. An dieser Stelle ist eine Darstellung von weiteren Daten möglich, also zusätzlichen Daten, deren Darstellung bei einer Darstellung als Kachel aus Platzgründen nicht möglich ist.

Die Erfindung ist auch ein Computerprogramm zur Implementierung der jeweiligen Funktionen, die für ein solches Bedienverfahren notwendig sind, sowie ein Automatisierungsgerät, das zur Ausführung des Verfahrens und nachfolgend angegebener weiterer Ausführungsformen des Verfahrens bestimmt und eingerichtet ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruchs durch die Merkmale des jeweiligen Unteranspruchs hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer besonderen Ausführungsform des Verfahrens, bei dem eine Darstellung einer Kachel einerseits als Kachel außerhalb des zentralen Anzeigebereichs mit einer ersten Gruppe von Daten sowie andererseits an der Position des zentralen Anzeigebereichs mit einer zweiten Gruppe von Daten möglich ist, liegt einer solchen Kachel ein Datensatz mit entweder einem ersten oder einem zweiten Abschnitt zugeordneten Einträgen zugrunde. Jeder Eintrag spezifiziert das jeweils anzuzeigende Datum. Bei einer Darstellung der Kachel außerhalb des zentralen Anzeigebereichs erfolgt eine Darstellung der Daten entsprechend der von dem ersten Abschnitt des Datensatzes umfassten Einträge. Bei einer Darstellung der Kachel an der Stelle des zentralen Anzeigebereichs erfolgt eine Darstellung der Daten entsprechend der von dem zweiten Abschnitt des Datensatzes umfassten Einträge. Auf diese Weise lässt sich der Umfang der jeweils dargestellten Daten spezifisch an die Art der jeweiligen Darstellung anpassen, so dass bei einer Darstellung der Kachel außerhalb des zentralen Anzeigebereichs nur eine reduzierte Menge von Daten zur Anzeige gelangt, während bei einer Darstellung der Kachel an der Position des zentralen Anzeigebereichs eine größere Datenmenge zur Anzeige gebracht werden kann. Die Einträge eines solchen Datensatzes können für Anpassungen durch den Benutzer zugänglich sein, so dass der Benutzer die jeweils angezeigten Daten seinen Bedürfnissen anpassen kann.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Produktionsmaschine mit einer Bedienungs- und einer Anzeigeeinrichtung,
- FIG 2: eine einen mittels der Anzeigeeinrichtung darstellbaren Anzeigebereich,
- FIG 3: eine Darstellung mittels der Anzeigeeinrichtung entsprechend dem hier vorgeschlagenen Ansatz sowie
- FIG 4: einen Datensatz als Basis für Darstellungen gemäß dem hier vorgeschlagenen Ansatz.

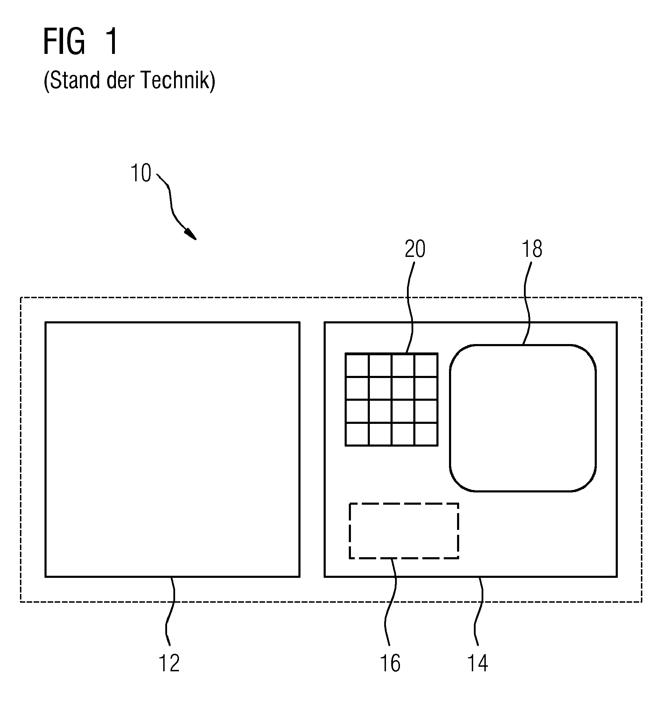

Die Darstellung in FIG 1 zeigt in schematisch stark vereinfachter Form eine Produktionsmaschine 10, bei der es sich zum Beispiel um eine Werkzeugmaschine (CNC-Maschine) handelt. Die Produktionsmaschine 10 umfasst in an sich bekannter Art und Weise einen apparativen Teil 12 mit zum Beispiel einer Achse oder mehreren Achsen sowie einen Steuerungsteil 14. Der apparative Teil 12 wie auch der Steuerungsteil 14 sind an sich bekannt, so dass hier auf eine Erläuterung einzelner Details verzichtet werden kann.

Der Steuerungsteil 14 umfasst in an sich bekannter Art und Weise zumindest eine Verarbeitungseinheit in Form von oder nach Art eines Mikroprozessors sowie einen Speicher 16, in den ein Systemprogramm sowie zumindest ein Anwenderprogramm ladbar und im Betrieb geladen ist. Unter Kontrolle des Anwenderprogramms erfolgt mittels des Steuerungsteils 14 eine Ansteuerung zum Beispiel der von dem apparativen Teil 12 umfassten Achse oder Achsen, so dass als Ergebnis des Betriebs der Produktionsmaschine 10 zum Beispiel ein Werkstück entsteht.

Als Bestandteil des Steuerungsteils 14 ist in der Darstellung in FIG 1 ein als Anzeigeeinrichtung 18 fungierender Bildschirm gezeigt. Mittels der Anzeigeeinrichtung 18 erfolgt beim Betrieb der Produktionsmaschine 10 eine Ausgabe von Daten zum Status des Produktionsprozesses und/oder zum Zustand der Produktionsmaschine 10. Auf den Produktionsprozess oder auf die Produktionsmaschine 10 kann ein Bediener der Produktionsmaschine 10 mittels entsprechender Bedienhandlungen Einfluss nehmen. Insoweit ist exemplarisch als Bestandteil des Steuerungsteils 14 eine Tastatur 20 gezeigt. Die von der Tastatur 20 umfassten Tasten können auch als sogenannte Softkeys mittels der Anzeigeeinrichtung 18 dargestellt und durch Berührung der Anzeigeeinrichtung 18 im Bereich der dargestellten Taste betätigt werden.

Die Anzeigeeinrichtung 18 mit der Tastatur 20 fungiert als Bedienungseinrichtung der Produktionsmaschine 10. Wenn auf eine reale Tastatur 20 verzichtet werden kann und die von der Tastatur 20 umfassten Tasten stattdessen als Softkeys mittels der Anzeigeeinrichtung 18 dargestellt werden, fungiert nur die Anzeigeeinrichtung 18 als Bedienungseinrichtung der Produktionsmaschine. Die Bedienungseinrichtung muss nicht notwendig von dem Steuerungsteil 14 umfasst sein und kann auch räumlich unabhängig von dem Steuerungsteil 14, aber mit diesem kommunikativ verbunden, realisiert sein.

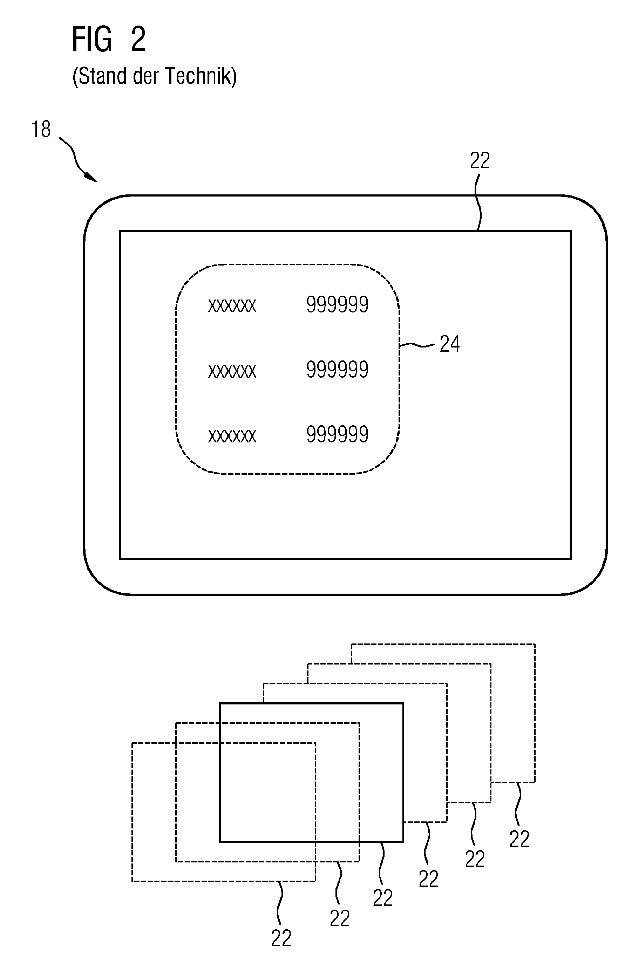

FIG 2 zeigt eine vergrößerte Darstellung der Anzeigeeinrichtung 18. Naturgemäß ist der zur Darstellung von Daten 24 mittels der Anzeigeeinrichtung 18 zur Verfügung stehende Platz begrenzt. Die Darstellung in FIG 2 zeigt entsprechend symbolisch einen die gesamte Fläche der Anzeigeeinrichtung 18 einnehmenden Anzeigebereich 22 mit einzelnen, nur symbolisch gezeigten Daten 24.

Zur Darstellung sämtlicher Daten des Produktionsprozesses oder der Produktionsmaschine 10 können mehrere Anzeigebereiche 22 erforderlich sein, wie dies im unteren Bereich der Darstellung von FIG 2 gezeigt ist. Auch wenn mehrere derartige Anzeigebereiche 22 vorgesehen und verfügbar sind, erfolgt zu einem bestimmten Zeitpunkt mittels der Anzeigeeinrichtung 18 jeweils nur die Darstellung genau eines Anzeigebereichs 22. Wenn der Bediener die von einem anderen Anzeigebereich 22 umfassten Daten benötigt, muss auf diesen anderen Anzeigebereich 22 umgeschaltet werden. Dafür nimmt der Bediener entsprechende Bedienhandlungen an dem Steuerungsteil 14 vor, zum Beispiel mittels der Tastatur 20. Im Ergebnis wird anstelle eines zuvor mittels der Anzeigeeinrichtung 18 dargestellten Anzeigebereichs 22 ein anderer Anzeigebereich 22 dargestellt.

Dies ist ungünstig, weil dem jeweiligen Bediener stets nur die Daten 24 eines einzelnen Anzeigebereichs 22 für Kontrollzwecke oder dergleichen zur Verfügung stehen. Zudem sind für die Umschaltung auf einen anderen Anzeigebereich 22 Bedienhandlungen erforderlich, die zeitaufwändig sind und bei einer eventuellen Fehleingabe auch dazu führen, dass zwar auf einen anderen Anzeigebereich 22 umgeschaltet wird, aber dieser neue Anzeigebereich 22 nicht die eigentlich vom Bediener gewünschten Daten 24 zeigt, so dass eine erneute Bedienhandlung notwendig wird.

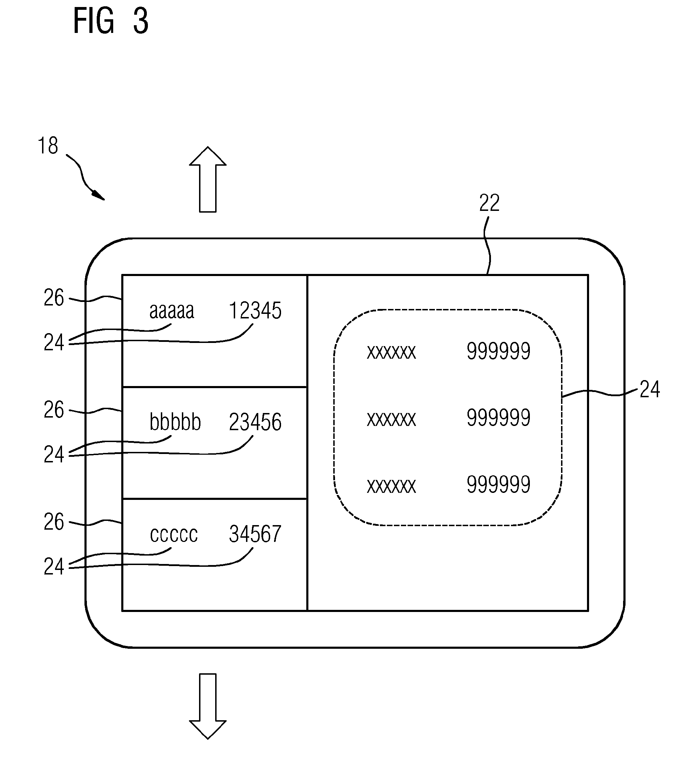

Die Darstellung in FIG 3 zeigt im Vergleich dazu schematisch vereinfacht eine Bildschirmausgabe mittels der Anzeigeeinrichtung 18 gemäß dem hier vorgeschlagenen Ansatz. Danach erfolgt mittels der Anzeigeeinrichtung 18 an zentraler Stelle eine Anzeige eines Anzeigebereichs 22, der nach Art und Umfang der davon umfassten Daten 24 im Wesentlichen einem Anzeigebereich 22 entspricht, wie er bisher mittels der Anzeigeeinrichtung 18 dargestellt wurde. Zusätzlich zu dem Anzeigebereich 22 erfolgt zum Beispiel neben und/oder unter oder über dem Anzeigebereich 22 eine Darstellung zumindest eines weiteren Anzeigebereichs, der zur Unterscheidung im Folgenden als Kachel 26 bezeichnet wird. Mittels jeder Kachel 26 lassen sich eigene davon umfasste Daten 24 darstellen.

Der Umfang der mittels einer Kachel 26 darstellbaren Daten 24 ist notwendig gegenüber dem Umfang der mittels des zentralen Anzeigebereichs 22 darstellbaren Daten 24 begrenzt. Der Vorteil der Verwendung solcher Kacheln 26 zusätzlich zu dem zentralen Anzeigebereich 22 liegt allerdings darin, dass jederzeit zusätzlich zu den von dem Anzeigebereich 22 umfassten Daten 24 auch die von der oder jeder Kachel 26 umfassten Daten 24 für den Bediener sichtbar sind.

In der Darstellung in FIG 3 sind drei vertikal übereinander angeordnete Kacheln 26 gezeigt, die sich links von dem Anzeigebereich 22 befinden. Dies ist nur eine beispielhafte Darstellung und in keinster Weise auf die gezeigte Anzahl der Kacheln 26 sowie die gezeigte Position beschränkt.

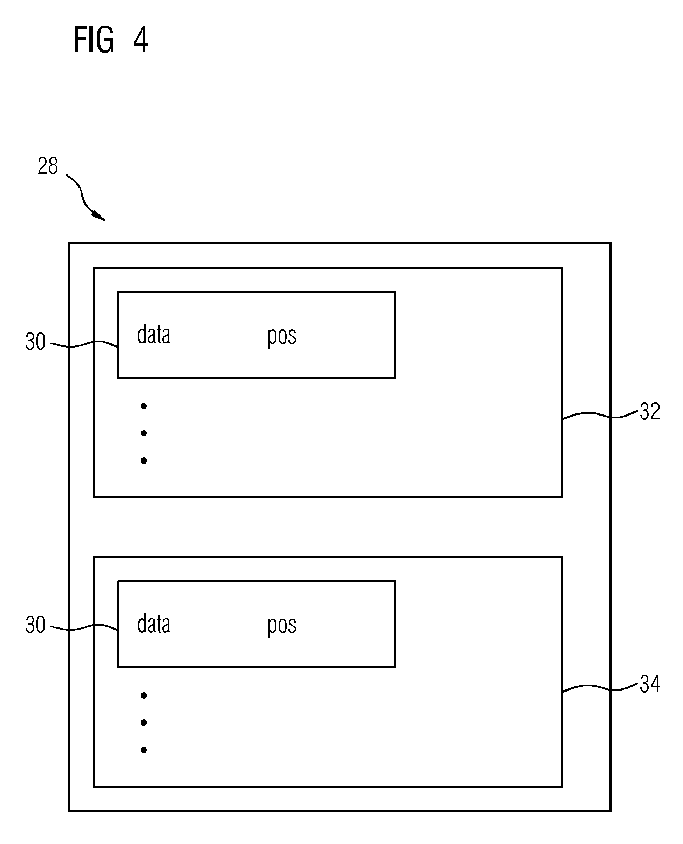

Die Darstellung in FIG 4 zeigt schematisch vereinfacht, dass jeder Kachel 26 - und grundsätzlich auch dem Anzeigebereich 22 - ein Datensatz 28 zugrunde liegt, der zumindest die jeweils angezeigten Daten 24 sowie die jeweilige Anzeigeposition spezifiziert. Dazu umfasst der Datensatz 28 ein oder mehrere Einträge 30, wobei normalerweise für jedes angezeigte Datum 24 ein Eintrag 30 vorgesehen ist.

Der oder jeder Datensatz 28 ist in einem Speicher 16 der Bedienungseinrichtung abgelegt und der Inhalt eines Datensatzes 28 ist entweder vom Hersteller der jeweiligen Produktionsmaschine 10 festgelegt oder kann vom Bediener angepasst werden. Es kann auch vorgesehen sein, dass einzelne Datensätze 28 vom Hersteller der Produktionsmaschine 10 festgelegt und entsprechend nicht veränderbar sind und dass andere Datensätze 28 vom Bediener angepasst und/oder vom Bediener angelegt werden können.

Der Inhalt eines Eintrags 30 eines Datensatzes 28 ist in der Darstellung in FIG 4 nur symbolisch gezeigt. Danach umfasst jeder Eintrag 30 zumindest eine Spezifikation des jeweils anzuzeigenden Datums 24 ("data") sowie eine Spezifikation einer jeweiligen Position ("pos"), an der die Anzeige des Datums 24 erfolgt.

Bei einer speziellen Variante des hier vorgeschlagenen Ansatzes repräsentiert jede Kachel 26 zum Beispiel eine spezielle Gruppe oder Kategorie von Daten 24 der Produktionsmaschine 10 oder des jeweiligen Produktionsprozesses. Mittels der jeweiligen Kachel 26 erfolgt dann einerseits parallel zu der Anzeige der Daten 24 in dem zentralen Anzeigebereich 22 eine Anzeige von zusätzlichen Daten 24. Wenn der Benutzer weitere Daten 24 entsprechend den von der Kachel 26 angezeigten Daten 24 benötigt, kann dieser die Kachel 26 quasi in den Vordergrund rufen und die Kachel 26 verschwindet von ihrer Position außerhalb des Anzeigebereichs 22 und nimmt stattdessen die Position des Anzeigebereichs 22 ein. Entsprechend der größeren Fläche des Anzeigebereichs 22 können hier zusätzliche Daten 24 angezeigt werden, die im Rahmen der Darstellung als Kachel 26 nicht angezeigt werden können.

Zu diesem Zweck ist der der jeweiligen Kachel 26 zugrunde liegende Datensatz 28 zumindest in einen ersten Abschnitt 32 und einen zweiten Abschnitt 34 unterteilt. Wenn die jeweilige Kachel 26 außerhalb des zentralen Anzeigebereichs 22 angezeigt wird, erfolgt eine Darstellung der von dem ersten Abschnitt 32 des Datensatzes 28 umfassten Einträge 30. Wenn die jeweilige Kachel 26 dagegen die Position des zentralen Anzeigebereichs 22 einnimmt, erfolgt eine Darstellung der von dem zweiten Abschnitt 34 des Datensatzes 28 umfassten Einträge 30.

Auf diese Weise kann die jeweils dargestellte Informationsmenge auf den Ort der Darstellung der Kachel 26 - entweder neben, unter oder über dem zentralen Anzeigebereich 22 oder an der Position des zentralen Anzeigebereichs 22 - abgestellt werden.

Bei einem vom Benutzer anpassbaren Datensatz 28 kann dabei auch beeinflusst werden, welche Daten 24 bei der Darstellung als Kachel 26 bzw. bei der Darstellung an der Position des zentralen Anzeigebereichs 22 angezeigt werden sollen.

Solange eine Kachel 26 neben, unter oder über dem zentralen Anzeigebereich 22 angezeigt wird, sind in Bezug auf die oder jede Kachel 26 zusätzliche Bedienhandlungen möglich. So kann zum Beispiel bei einer Mehrzahl von neben, unter oder über dem Anzeigebereich 22 angezeigter Kacheln 26 ein "Scrollen" der Kacheln 26 möglich sein. Dies ist in der Darstellung in FIG 3 durch die beiden Blockpfeile oberhalb und unterhalb der hier exemplarisch gezeigten drei Kacheln 26 angedeutet. Beim Scrollen ändert sich die Positionen der Kacheln 26 und es kann gewissermaßen jeweils eine Kachel 26 aus dem mittels der Anzeigeeinrichtung 18 dargestellten Bereich herausgeschoben werden, so dass bei einer zum Beispiel am oberen Rand herausgeschobenen Kachel 26 am unteren Rand Platz für die Darstellung einer bisher nicht sichtbaren Kachel 26 entsteht und entsprechend dort die Darstellung einer solchen bisher nicht sichtbaren Kachel 26 erfolgt.

Zusätzlich oder alternativ besteht auch die Möglichkeit, den von einer Kachel 26 auf der Fläche der Anzeigeeinrichtung 18 belegten Platz zu beeinflussen, indem zum Beispiel in Bezug auf eine von der jeweiligen Kachel 26 umfasste Überschrift, Titelzeile oder dergleichen eine Bedienhandlung vorgenommen wird, die eine in ihrem normalen Umfang angezeigte Kachel 26 auf die Darstellung der Überschrift, Titelzeile, etc. reduziert und bei einer erneuten entsprechenden Bedienhandlung die Kachel 26 wieder auf ihre ursprüngliche Fläche vergrößert.

Solche Bedienhandlungen können in Form von Gesten vorgenommen werden, wie sie bei der Bedienung moderner sogenannter Smartphones üblich geworden sind. So kann zum Beispiel das oben beschriebene Scrollen durch sogenanntes "Wischen" auf der Oberfläche der Anzeigeeinrichtung 18 ausgelöst werden. Eine Richtung, in der damit die angezeigten Kacheln 26 bewegt werden, entspricht dabei der Richtung der jeweiligen Bedienhandlung. Die Bedienung und die Bedienmöglichkeiten sind damit unmittelbar intuitiv verständlich.

Genauso kann das Aufrufen einer Kachel 26 in den Vordergrund, also die Darstellung einer Kachel 26 an der Position des zentralen Anzeigebereichs 22, durch eine solche Geste ausgelöst werden. Wenn - wie dies exemplarisch in der Darstellung in FIG 3 gezeigt ist - die Darstellung der Kacheln 26 neben der Darstellung des zentralen Anzeigebereichs 22 erfolgt, kommt zum Aufrufen einer Kachel 26 in den Vordergrund eine Bedienhandlung in Form eines im Wesentlichen horizontalen Wischens in Richtung auf den zentralen Anzeigebereich 22 in Betracht. Die Kachel 26 wird also gewissermaßen vom Platz der Darstellung neben dem Anzeigebereich 22 auf den Anzeigebereich 22 gezogen. Auch dies ist eine unmittelbar intuitiv verständliche Bedienmöglichkeit. Der Benutzer sieht als Ergebnis seiner Bedienhandlung, dass die Kachel 26 von ihrer ursprünglichen Position neben dem Anzeigebereich 22 verschwindet und anschließend an der Position des zentralen Anzeigebereichs 22 dargestellt wird. Auf diese Weise ist auch eine schnelle Umschaltung zwischen unterschiedlichen Darstellungen im Bereich des zentralen Anzeigebereichs 22 möglich. Der Benutzer zieht gewissermaßen jeweils eine Kachel 26 mit den für ihn relevanten Daten 24 auf den zentralen Anzeigebereich 22. Fehlbedienungen sind dabei weitestgehend ausgeschlossen. Selbst wenn eine Fehlbedienung vorgekommen sein sollte oder der Benutzer feststellt, dass die im zentralen Anzeigebereich 22 dargestellten Daten 24 nicht die von ihm gewünschten Daten 24 sind, kann der Benutzer ohne Zeitverzug eine andere Kachel 26 aufrufen und dazu zum Beispiel auf den zentralen Anzeigebereich 22 ziehen.

Das Vergrößern oder Verkleinern einer Kachel 26, also zum Beispiel die Umschaltung zwischen einer bloßen Darstellung der Titelzeile und einer Darstellung der vollständigen Kachel 26, kann zum Beispiel durch eine Bedienhandlung in Bezug auf die Titelzeile der Kachel 26 ausgelöst werden. Hier kommt eine Bedienhandlung in Form eines sogenannten "Doppelklicks" in Betracht, also zum Beispiel ein doppeltes Antippen der Überschrift oder ein doppeltes Antippen der von der Darstellung der Kachel 26 eingenommenen Fläche in Betracht.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Einzelne im Vordergrund stehende Aspekte der hier eingereichten Beschreibung lassen sich damit kurz wie folgt zusammenfassen: Angegeben wird ein Verfahren zum Betrieb einer Bedienungseinrichtung eines Automatisierungsgeräts, nämlich ein Verfahren zum Bedienen der Bedienungseinrichtung, wobei die Bedienungseinrichtung eine Anzeigeeinrichtung 18 umfasst und wobei mittels der Anzeigeeinrichtung 18 eine Darstellung von Daten 24 des Automatisierungsgeräts und/oder eines mittels des Automatisierungsgeräts gesteuerten Prozesses erfolgt, wobei die Darstellung mittels der Anzeigeeinrichtung 18 eine Darstellung eines zentralen Anzeigebereichs 22 sowie eine Darstellung zumindest einer als weiterer Anzeigebereich fungierenden Kachel 26 außerhalb des zentralen Anzeigebereichs 22 umfasst und wobei einer Kachel 26 zugeordnete Daten 24 aufgrund einer entsprechenden Bedienhandlung eines Benutzers der Bedienungseinrichtung an der Position des zentralen Anzeigebereichs 22 dargestellt werden. Im Ergebnis wird auf diese Weise erreicht, dass die einzelnen Kacheln 26 gewissermaßen als Vorschaufenster für weitere darstellbare Daten 24 fungieren und dass durch die parallele Anzeige der Daten 24 auf dem zentralen Anzeigebereich 22 und die Daten 24 der oder jeder gleichzeitig angezeigten Kachel 26 der Benutzer unterschiedliche Daten 24 gleichzeitig im Blick behalten kann, die sonst nicht gleichzeitig dargestellt werden. Der Benutzer kann eine Kachel 26 einfach in den Vordergrund rufen, so dass sie an der Stelle des zentralen Anzeigebereichs 22 dargestellt wird. Auf diese Weise ist ein schnelles Umschalten zwischen den jeweils dargestellten Daten 24 möglich. Das Konzept zeichnet sich durch eine hohe Konfigurierbarkeit aus, so dass für den Benutzer damit auch die Möglichkeit entsteht, den Umfang der jeweils angezeigten Daten 24 seinen Bedürfnissen anzupassen.

## Patentansprüche

1. Verfahren zum Betrieb einer Bedienungseinrichtung eines Automatisierungsgeräts,
wobei die Bedienungseinrichtung eine Anzeigeeinrichtung (18) umfasst und wobei mittels der Anzeigeeinrichtung (18) eine Darstellung von Daten (24) des Automatisierungsgeräts und/oder eines mittels des Automatisierungsgeräts gesteuerten Prozesses erfolgt,
wobei die Darstellung mittels der Anzeigeeinrichtung (18) eine Darstellung eines zentralen Anzeigebereichs (22) sowie eine Darstellung zumindest einer als weiterer Anzeigebereich fungierenden Kachel (26) außerhalb des zentralen Anzeigebereichs (22) umfasst und
wobei einer Kachel (26) zugeordnete Daten (24) aufgrund einer entsprechenden Bedienhandlung eines Benutzers der Bedienungseinrichtung an der Position des zentralen Anzeigebereichs (22) dargestellt werden.

2. Verfahren nach Anspruch 1, wobei einer Kachel (26) ein Datensatz (28) mit einer Mehrzahl von Einträgen (30) zur Spezifikation der anzeigbaren Daten (24) zugrunde liegt, wobei der Datensatz (28) in einen ersten und einen zweiten Abschnitt (32, 34) unterteilt ist und wobei bei einer Darstellung der Kachel (26) außerhalb des zentralen Anzeigebereichs (22) eine Darstellung der von dem ersten Abschnitt (32) des Datensatzes (28) umfassten Einträge (30) und bei einer Darstellung der Kachel (26) an der Position des zentralen Anzeigebereichs (22) eine Darstellung der von dem zweiten Abschnitt (34) des Datensatzes (28) umfassten Einträge (30) erfolgt.

3. Verfahren nach Anspruch 2, wobei die Einträge (30) zumindest einzelner Datensätze (28) durch den Bediener anpassbar sind.

4. Verfahren nach Anspruch 1, 2 oder 3, wobei bei einer Darstellung mehrerer Kacheln (26) außerhalb des zentralen Anzeigebereichs (22) die Kacheln (26) durch Scrollen verschiebbar sind.

5. Verfahren nach Anspruch 1, 2, 3 oder 4, wobei eine außerhalb des zentralen Anzeigebereichs (22) dargestellte Kachel (26) mittels einer auf die Kachel (26) bezogenen Bedienhandlung zur Darstellung an der Position des zentralen Anzeigebereichs (22) aufgerufen wird.

6. Verfahren nach Anspruch 1, 2, 3, 4 oder 5, wobei eine außerhalb des zentralen Anzeigebereichs (22) dargestellte Kachel (26) mittels einer auf die Kachel (26) bezogenen Bedienhandlung je nach einer momentanen Darstellungsart vergrößert oder verkleinert wird.

7. Verfahren nach Anspruch 4, 5 oder 6, wobei das Scrollen, das Aufrufen einer Kachel (26) zur Darstellung an der Position des zentralen Anzeigebereichs (22), bzw. das Vergrößern oder Verkleinern der Kachel (26) mittels Bedienhandlungen in Bezug auf eine berührungsempfindliche Oberfläche der Anzeigeeinrichtung (18) ausgelöst wird.

8. Computerprogramm mit Programmcodemitteln zur Implementierung eines Verfahrens nach einem der vorangehenden Ansprüche.

9. Bedienungseinrichtung eines Automatisierungsgeräts mit einer Verarbeitungseinheit und einem Speicher (16), in den ein Computerprogramm gemäß Anspruch 8 geladen ist.

## Geänderte Patentansprüche

### Geänderte Patentansprüche gemäss Regel 137(2) EPÜ.

1. Verfahren zum Betrieb einer Bedienungseinrichtung eines Automatisierungsgeräts,
wobei die Bedienungseinrichtung eine Anzeigeeinrichtung (18) umfasst und wobei mittels der Anzeigeeinrichtung (18) eine Darstellung von Daten (24) des Automatisierungsgeräts und/oder eines mittels des Automatisierungsgeräts gesteuerten Prozesses erfolgt,
wobei die Darstellung mittels der Anzeigeeinrichtung (18) eine Darstellung eines zentralen Anzeigebereichs (22) sowie eine Darstellung zumindest einer als weiterer Anzeigebereich fungierenden Kachel (26) außerhalb des zentralen Anzeigebereichs (22) umfasst und
wobei einer Kachel (26) zugeordnete Daten (24) aufgrund einer entsprechenden Bedienhandlung eines Benutzers der Bedienungseinrichtung an der Position des zentralen Anzeigebereichs (22) dargestellt werden
**dadurch gekennzeichnet,**
**dass** einer Kachel (26) ein Datensatz (28) mit einer Mehrzahl von Einträgen (30) zur Spezifikation der anzeigbaren Daten (24) zugrunde liegt,
**dass** der Datensatz (28) in einen ersten und einen zweiten Abschnitt (32, 34) unterteilt ist und
**dass** bei einer Darstellung der Kachel (26) außerhalb des zentralen Anzeigebereichs (22) eine Darstellung der von dem ersten Abschnitt (32) des Datensatzes (28) umfassten Einträge (30) und
bei einer Darstellung der Kachel (26) an der Position des zentralen Anzeigebereichs (22) eine Darstellung der von dem zweiten Abschnitt (34) des Datensatzes (28) umfassten Einträge (30) erfolgt.

2. Verfahren nach Anspruch 1, wobei die Einträge (30) zumindest einzelner Datensätze (28) durch den Bediener anpassbar sind.

3. Verfahren nach Anspruch 1 oder 2, wobei bei einer Darstellung mehrerer Kacheln (26) außerhalb des zentralen Anzeigebereichs (22) die Kacheln (26) durch Scrollen verschiebbar sind.

4. Verfahren nach Anspruch 1, 2 oder 3, wobei eine außerhalb des zentralen Anzeigebereichs (22) dargestellte Kachel (26) mittels einer auf die Kachel (26) bezogenen Bedienhandlung zur Darstellung an der Position des zentralen Anzeigebereichs (22) aufgerufen wird.

5. Verfahren nach Anspruch 1, 2, 3 oder 4, wobei eine außerhalb des zentralen Anzeigebereichs (22) dargestellte Kachel (26) mittels einer auf die Kachel (26) bezogenen Bedienhandlung je nach einer momentanen Darstellungsart vergrößert oder verkleinert wird.

6. Verfahren nach Anspruch 3, 4 oder 5, wobei das Scrollen, das Aufrufen einer Kachel (26) zur Darstellung an der Position des zentralen Anzeigebereichs (22), bzw. das Vergrößern oder Verkleinern der Kachel (26) mittels Bedienhandlungen in Bezug auf eine berührungsempfindliche Oberfläche der Anzeigeeinrichtung (18) ausgelöst wird.

7. Computerprogramm mit Programmcodemitteln zur Implementierung eines Verfahrens nach einem der vorangehenden Ansprüche.

8. Bedienungseinrichtung eines Automatisierungsgeräts mit einer Verarbeitungseinheit und einem Speicher (16), in den ein Computerprogramm gemäß Anspruch 7 geladen ist.
